Europäisches Patentamt

European Patent Office

Office européen des brevets

(19)

(11) EP 1 261 209 A2

(12) **DEMANDE DE BREVET EUROPEEN**

(43) Date de publication:
**27.11.2002 Bulletin 2002/48**

(51) Int Cl.⁷: $H04N\ 7/26$, $H04N\ 7/50$

(21) Numéro de dépôt: **02076504.6**

(22) Date de dépôt: **17.04.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **24.04.2001 FR 0105507**

(71) Demandeur: **Koninklijke Philips Electronics N.V.**
**5621 BA Eindhoven (NL)**

(72) Inventeur: **Bourge, Arnaud, Societe Civile S.P.D.I.**
**75008 Paris (FR)**

(74) Mandataire: **Chaffraix, Jean**
**Société Civile S.P.I.D.**
**156, Boulevard Haussmann**
**75008 Paris (FR)**

(54) **Procédé de détection de bruit dans un flux de données vidéo codées**

(57)     La présente invention concerne un procédé de détection de bruit dans un flux de données vidéo codées par macroblocs selon une technique de codage prédictif par blocs, les macroblocs étant codés selon un type de codage. Ledit procédé comprend une étape de lecture du flux de données vidéo codées afin de détecter dans une image courante un type de codage intra et une position d'un macrobloc correspondant à ce type de codage, appelé par la suite macrobloc intra. Il comprend également une étape de recherche du ou des types de codage d'un ensemble de macroblocs de référence dans une table de référence contenant les types de codage de macroblocs contenus dans une image à codage prédictif de référence, l'ensemble de macroblocs de référence ayant, dans l'image de référence, une position voisine de la position du macrobloc intra dans l'image courante. Il comprend enfin une étape de détection d'un macrobloc bruité à partir du ou des types de codage de l'ensemble de macroblocs de référence.

FIG. 2

## Description

### Domaine technique de l'invention

La présente invention concerne un procédé de détection de bruit dans un flux de données vidéo codées par macroblocs selon une technique de codage prédictif par blocs, les macroblocs étant codés selon un type de codage.

Elle concerne un procédé de réduction de bruit dans un tel flux de données vidéo.

Elle concerne également un procédé de transcodage utilisant de tels procédés de détection et de réduction de bruit.

Elle concerne enfin un produit programme d'ordinateur pour la mise en oeuvre du procédé de détection de bruit, du procédé de réduction de bruit et du procédé de transcodage.

Elle trouve notamment son application dans le transcodage de données vidéo, de type MPEG par exemple, pour un enregistrement de haute qualité desdites données vidéo lorsqu'elles sont transcodées à un débit variable.

### Etat de la technique antérieure

La demande de brevet européen n° 1 032 217 divulgue une méthode et un dispositif de transcodage de données vidéo numériques codées comportant un réducteur de bruit. Une telle méthode de transcodage (10) de données vidéo numériques codées comprend en séries:

-   une étape de décodage (100) du flux de données vidéo codées apte à fournir un flux de données intermédiaires reconstruites, ladite étape de décodage comprenant les sous-étape de décodage à longueur variable VLD (101), de quantification inverse IQ (102) et de transformation inverse en cosinus discrète IDCT (103), ainsi qu'une première compensation de mouvement (104, 105, 106),
-   une étape intermédiaire de traitement (110) du flux de données intermédiaires reconstruites comportant notamment un filtre de réduction de bruit DF (111), pour fournir un flux de données intermédiaires reconstruites modifiées, et
-   une étape de codage (120) du flux de données intermédiaires reconstruites modifiées, apte à fournir un flux de données vidéo codées modifiées, ladite étape de codage comprenant les sous-étapes de transformation en cosinus discrète DCT (122), de quantification Q (123), de codage à longueur variable VLC (124), ainsi qu'une seconde compensation de mouvement (121, 125, 126, 127, 128, 129).

L'étape de réduction de bruit est effectuée dans le domaine spatial à partir de données reconstruites. Ainsi, elle n'est pas applicable à un transcodeur qui comprend une étape de décodage partiel, c'est à dire sans sous-étape de transformation inverse en cosinus discrète IDCT (103) comme décrit dans la demande de brevet européen n° 0 690 392, et qui de ce fait ne reconvertit pas le flux de données vidéo codées dans le domaine spatial. De plus la méthode de transcodage de données vidéo numériques codées ne comprend pas non plus d'étape de détection de bruit à proprement parler, sur la base de laquelle l'étape de réduction de bruit pourrait être appliquée de façon plus efficace.

### Exposé de l'invention

La présente invention a pour objet de proposer un procédé de détection de bruit qui puisse être mis en oeuvre de façon simple et efficace sans décodage et reconstruction des données dans le domaine spatial.

A cet effet, le procédé de détection de bruit tel que décrit dans le paragraphe d'ouverture est remarquable en ce qu'il comprend les étapes de:

-   lecture du flux de données vidéo codées afin de détecter dans une image courante un type de codage intra et une position d'un macrobloc correspondant à ce type de codage, appelé par la suite macrobloc intra,
-   recherche du ou des types de codage d'un ensemble de macroblocs de référence dans une table de référence contenant les types de codage de macroblocs contenus dans une image à codage prédictif de référence, l'ensemble de macroblocs de référence ayant, dans l'image de référence, une position voisine de la position du macrobloc intra dans l'image courante, et
-   détection d'un macrobloc bruité à partir du ou des types de codage de l'ensemble de macroblocs de référence.

Un tel procédé est apte à détecter une zone bruitée en utilisant simplement le type de codage des macroblocs d'une image courante quelconque, en l'occurrence le type de codage intra, ainsi que les types de codage des macroblocs d'une image de référence qui est une image B à codage prédictif bidirectionnel ou préférentiellement une image P à codage prédictif. Il utilise ainsi des données directement accessibles à partir du flux de données vidéo codées, par exemple issues d'une étape de décodage à longueur variable VLD. Ce procédé est donc particulièrement simple car il ne requiert pas une analyse statistique compliquée du flux de données vidéo, ne fait pas appel à des données futures, et ne nécessite pas de transformation inverse, de type IDCT par exemple, des macroblocs de données puisqu'il est effectué directement à partir des types de codage des images et des macroblocs.

La présente invention a également pour objet de proposer un procédé de réduction de bruit dans un flux de données vidéo codées, qui puisse être mis en oeuvre dans le domaine fréquentiel.

A cet effet, un tel procédé de réduction de bruit comprend une étape détection de bruit telle que décrite précédemment, qui est apte à fournir, pour un macrobloc courant, un niveau de bruit à partir du flux de données vidéo, et comprend en outre une étape de filtrage spatial apte à fournir un macrobloc de données filtrées en fonction du niveau de bruit fourni par l'étape de détection.

Ainsi, le procédé de réduction de bruit ne nécessite plus, au contraire l'état de la technique antérieure, de repasser dans le domaine spatial pour effectuer un filtrage des données bruitées, le filtrage étant directement appliqué dans le domaine fréquentiel sur des macroblocs de données codées.

La présente invention a enfin pour objet de proposer un procédé de transcodage d'un premier flux de données vidéo codées en un second flux de données vidéo codées, qui permette d'améliorer la qualité du second flux de données vidéo codées.

A cet effet, le procédé de transcodage comprend une étape de décodage d'un macrobloc courant compris dans le premier flux de données vidéo codées, ladite étape de décodage comprenant une sous-étape de décodage à longueur variable et une sous-étape de quantification inverse, et une étape de codage, à la suite de l'étape de décodage, apte à fournir le second flux de données vidéo codées, ladite étape de codage comprenant une sous-étape de quantification, et est de plus remarquable en ce qu'il comprend les étapes de:

- détection de bruit, apte à fournir pour le macrobloc courant un niveau de bruit à partir de types de codage du macrobloc courant et d'un ensemble de macroblocs de référence issus de la sous-étape de décodage à longueur variable, et
- filtrage spatial entre la sous-étape de quantification inverse et la sous-étape de quantification, le procédé de transcodage étant apte à appliquer ou non l'étape de filtrage au macrobloc courant selon le niveau de bruit fourni par l'étape de détection de bruit.

Un tel procédé de transcodage permet de détecter les macroblocs bruités et de leur appliquer un filtrage adapté à la valeur fournie par l'étape de détection de bruit. Il permet ainsi d'effectuer un filtrage adaptatif qui améliore la qualité des images transcodées. La simplicité de l'étape de détection de bruit, les faibles ressources mémoires qu'elle utilise et le fait qu'elle opère sur un flux de données non décodées rendent le procédé de transcodage particulièrement efficace.

**Brève description des dessins**

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels:

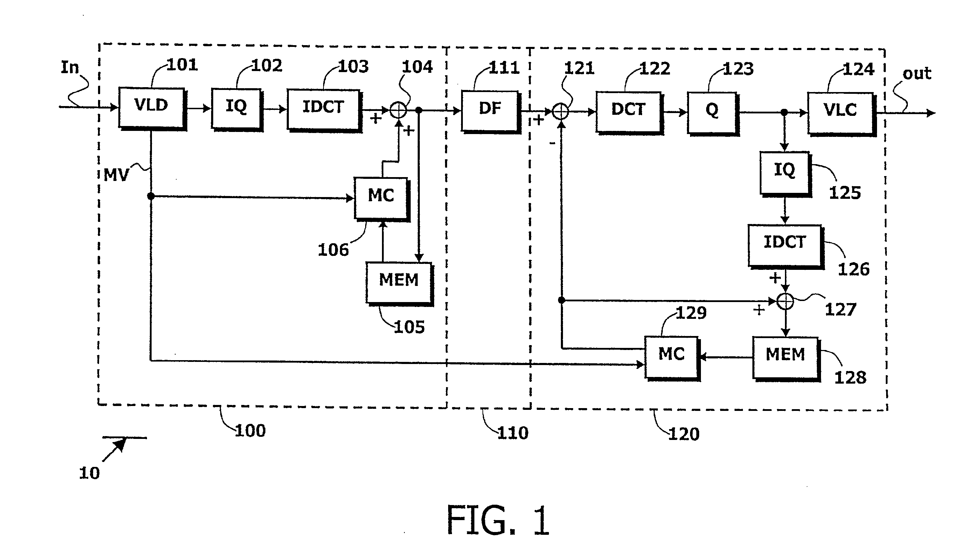

- la Fig. 1 est une représentation schématique d'un procédé de transcodage selon l'état de la technique antérieure,
- la Fig. 2 est un diagramme représentant les principales étapes du procédé de détection de bruit selon l'invention,
- la Fig. 3 est un exemple de résultat du procédé de détection de bruit, et
- la Fig. 4 est une représentation schématique d'un procédé de transcodage selon l'invention et du transcodeur lui correspondant.

**Exposé détaillé d'au moins un mode de réalisation de l'invention**

La présente invention concerne un procédé de détection de bruit dans un flux de données vidéo codées par macroblocs selon une technique de codage par blocs. Ladite technique de codage effectue un codage prédictif en codant les macroblocs selon un type de codage, le type intra lorsque le macrobloc est codé sans référence à un macrobloc d'une image précédente, le type inter lorsque le macrobloc est codé de façon différentielle par rapport à un macrobloc d'une image précédente. La technique de codage par blocs est, par exemple, la norme MPEG qui décompose les images en blocs de 8 lignes de 8 pixels, un macrobloc comprenant généralement, i.e. dans le cas d'un format 4:2:2, 4 blocs de luminance Y, un bloc de chrominance U et un bloc de chrominance V.

La présente invention tire partie de l'observation qu'un macrobloc qui contient du bruit a une forte probabilité d'être codé selon le type intra même lorsqu'il appartient à une image P à codage prédictif ou une image B à codage à codage prédictif bidirectionnel. Un tel macrobloc appartient souvent à une zone homogène, et l'estimateur de mouvement d'un codeur est susceptible de prédire qu'un codage de type intra du macrobloc bruité correspondra à un nombre minimum de bits transmis.

Cependant, d'autres raisons peuvent être à l'origine du codage d'un macrobloc selon le type intra telles que, par exemple, un changement de scène ou l'apparition d'un nouvel objet à l'intérieur d'une séquence d'images. De plus, les images I à codage Intra ne contiennent par nature que des macroblocs de type intra et il est peu probable que tous ces macroblocs soient des macroblocs bruités.

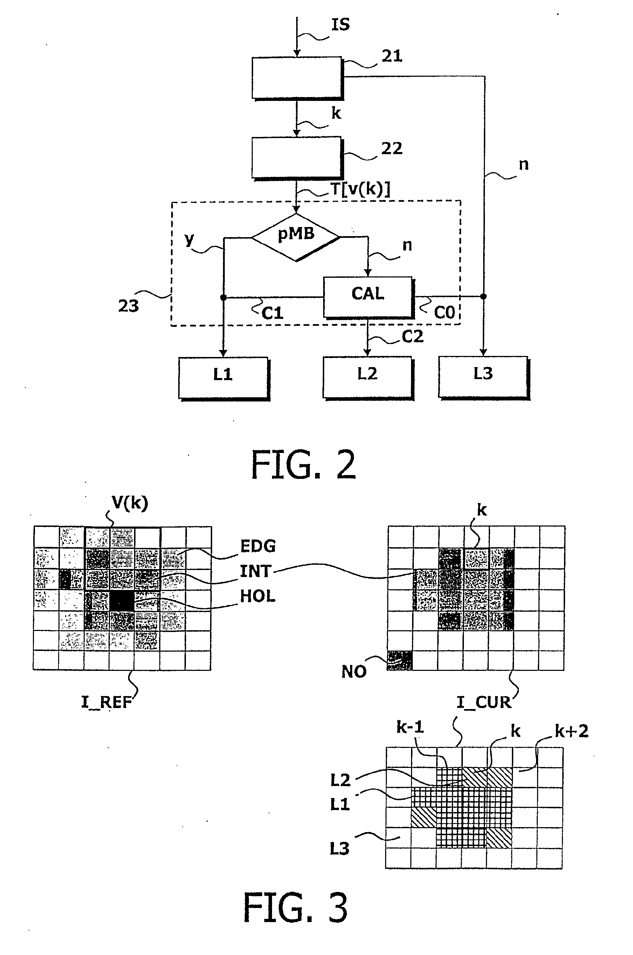

Le procédé de détection de bruit selon l'invention prend en compte ces différentes considérations. La Fig. 2 est un diagramme représentant les principales étapes dudit procédé de détection de bruit. Ce procédé comprend une étape de lecture (21) du flux de données vidéo codées (IS) afin de détecter, dans une image courante, un type de codage intra et une position (k) d'un macrobloc correspondant à ce type de codage, appelé par la suite macrobloc intra. Ces informations sont contenues dans les entêtes du flux de données vidéo codées. Si un macrobloc de l'image courante n'est pas de type intra, alors ce n'est pas un macrobloc bruité (L3).

Le procédé de détection de bruit comprend également une étape de recherche (22) du ou des types de codage (T[v(k)]) d'un ensemble de macroblocs de référence dans une table de référence (T) contenant les types de codage de macroblocs contenus dans une image à codage prédictif de référence, l'ensemble de macroblocs de référence ayant, dans l'image de référence, une position voisine (v(k)) de la position du macrobloc intra dans l'image courante. L'image de référence est une image B à codage prédictif bidirectionnel ou préférentiellement une image P à codage prédictif car ce type d'image recèle plus de macroblocs de type intra qu'une image B, et assure par conséquent une meilleure efficacité du procédé de détection de bruit. La position k varie de 1 à N, soit, dans une image de format standard (720 x 576 pixels), de 1 à 1620 et correspond à des coordonnées (k,1) du macrobloc dans l'image. La table de référence est donc préférentiellement une table de 1620 valeurs binaires, initialisée par exemple avec des 0, un '0' correspondant à un macrobloc de type inter tandis qu'un '1' correspond à un macrobloc de type intra.

Le procédé de détection de bruit comprend enfin une étape de détection (23) d'un macrobloc bruité à partir du ou des types de codage de l'ensemble de macroblocs de référence.

Dans un mode de réalisation particulièrement avantageux, l'ensemble de macroblocs de référence est constitué du seul macrobloc de position k dans l'image de référence. Ainsi, si un macrobloc de position k est de type intra dans l'image courante et dans l'image de référence, le macrobloc de l'image courante est un macrobloc bruité.

Dans le mode de réalisation préféré, l'étape de détection comprend en outre une sous-étape de calcul (CAL) d'une valeur d'environnement (C) à partir d'un nombre de types de codage intra de l'ensemble de macroblocs de référence. Dans ce cas, l'ensemble de macroblocs de référence est constitué du macrobloc de position k dans l'image de référence et des 8 macroblocs qui lui sont contigus. Il apparaîtra à l'homme du métier que cet ensemble peut être restreint ou au contraire étendu selon les ressources mémoires disponibles et la précision de la méthode que l'on souhaite obtenir. Une sous-étape de test (pMB) sur le type de codage d'un macrobloc de position k dans l'image de référence est effectuée préliminairement à la sous-étape de calcul. Si un macrobloc de position k est de type intra dans l'image courante et dans l'image de référence (y), alors le macrobloc de l'image courante est un macrobloc bruité principal (L1). Si un macrobloc de position k est un macrobloc intra dans l'image courante mais pas dans l'image de référence (n), alors la valeur d'environnement est prise en considération. Si la valeur d'environnement (C1) est supérieure ou égale à un premier seuil, 6 par exemple, c'est à dire si 6 des 8 macroblocs contigus sont des macroblocs de type intra, alors le macrobloc de l'image courante est un macrobloc bruité principal (L1). Si la valeur d'environnement (C2) est supérieure ou égale à un second seuil, 1 par exemple, et inférieure au premier seuil, alors le macrobloc de l'image courante est un macrobloc bruité frontalier (L2). Enfin, si la valeur d'environnement (C0) est inférieure au second seuil, le macrobloc de l'image courante n'est pas un macrobloc bruité (L3).

Un tel procédé de détection de bruit est avantageusement utilisé, par exemple, pour estimer de façon assez simple et rapide une quantité de bruit dans une image, et peut ainsi être une composante d'une mesure de qualité dans une séquence d'images. Dans le mode de réalisation préféré, ledit procédé est utilisé pour effectuer une réduction de bruit de façon adaptative.

En effet, l'étape de détection est apte à affecter deux niveaux de bruit (L1,L2) pour un macrobloc, un niveau principal et un niveau correspondant à une frontière de zone bruitée, à partir de la valeur d'environnement. Le traitement des macroblocs bruités ainsi détectés peut ainsi être adapté selon le niveau de bruit. Ce traitement est, dans le mode de réalisation préféré, un filtre spatial Ws défini pour chaque coefficient du domaine fréquentiel de position (i,j) dans un bloc de luminance ou de chrominance du macrobloc bruité comme suit:

$$Ws_{i,j} = \frac{2\cos(i\,\pi/8) + a_v}{2 + a_v} \cdot \frac{2\cos(j\,\pi/8) + a_h}{2 + a_h}.$$

Si le macrobloc courant n'est pas un macrobloc bruité (L3), aucun filtrage spatial n'est réalisé. En revanche, si le macrobloc courant est un macrobloc bruité principal (L1), un filtrage modéré est réalisé, avec $a_h = a_v = 8$ par exemple. Enfin, si le macrobloc courant est un macrobloc bruité frontalier (L2), un filtrage doux est réalisé, avec $a_h = a_v = 16$ par exemple. On obtient ainsi un procédé de réduction de bruit particulièrement efficace du fait de ce filtrage adaptatif. Un tel procédé peut avantageusement être utilisé dans un codeur vidéo pour réduire le bruit dans l'image pendant le codage, ou dans un décodeur pour réduire le bruit dans l'image pendant le décodage.

La Fig. 3 est un exemple de résultat du procédé de détection de bruit selon l'invention. Les macroblocs de type intra (INT) sont représentés en gris foncé dans l'image de référence (I_REF) et dans l'image courante (I_CUR). De plus les macroblocs contigus (EDG) de type inter contenus dans l'image de référence et à prendre en considération pour chaque macrobloc intra de l'image courante sont représentés en gris clair. Un macrobloc inter appelé par la suite macrobloc de trou (HOL) et entouré par des macroblocs intra est également représenté en noir dans l'image de référence. Pour un macrobloc de position k, l'ensemble de macrobloc de référence (v(k)) est représenté. Les principaux résultats suivants sont obtenus.

- Le macrobloc de position (k-1) est de type intra pour les images courante et de référence. C'est donc un macrobloc bruité principal (L1), représenté par un quadrillage.
- Le macrobloc de trou dans l'image de référence est un macrobloc de type intra dans l'image courante. Sa valeur d'environnement étant de 7, c'est donc également un macrobloc bruité principal (L1).
- Le macrobloc de position k est un macrobloc de type intra dans l'image courante mais pas dans l'image de référence. Sa valeur d'environnement étant de 4, c'est un macrobloc bruité frontalier (L2) représenté ici par des hachures diagonales.
- Le macrobloc de positon (k+2) n'est pas un macrobloc de type intra dans l'image courante, ça n'est donc pas un macrobloc bruité (L3).
- Le macrobloc correspondant à un nouvel objet (NO) dans l'image courante est de type intra dans ladite image mais a une valeur d'environnement nulle. Ca n'est donc pas non plus un macrobloc bruité (L3).

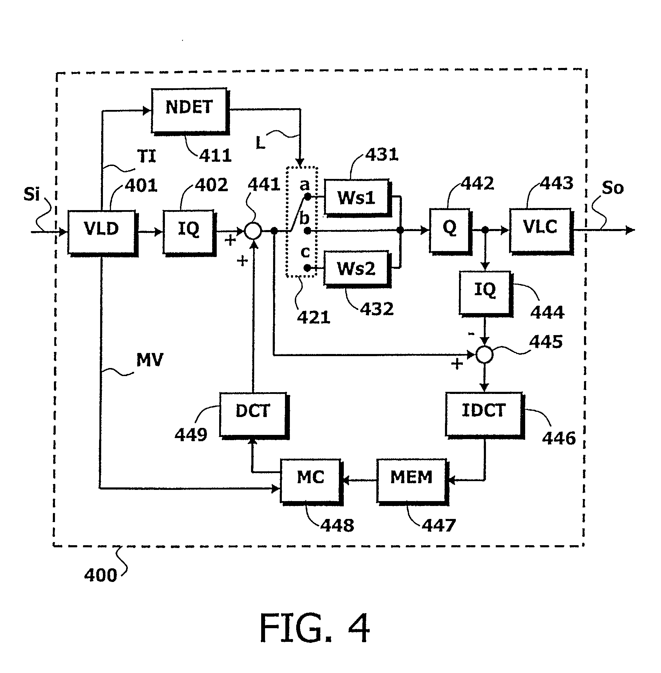

La Fig. 4 est une représentation schématique d'un procédé de transcodage (400) selon l'invention. Ledit procédé de transcodage convertit un premier flux de données vidéo (Si) codées par macroblocs selon une technique de codage prédictif par blocs, en un second flux de données vidéo codées (So).

A cet effet, il comprend une étape de décodage d'un macrobloc courant compris dans le premier flux de données vidéo codées, ladite étape de décodage comprenant une sous-étape de décodage à longueur variable VLD (401) suivie d'une sous-étape de première quantification inverse IQ (402).

Le procédé de transcodage comprend une étape de codage, apte à fournir le second flux de données vidéo codées, ladite étape de codage comprenant une sous-étape de quantification Q (442) suivie d'une sous-étape de codage à longueur variable VLC (443). Il comporte également une étape de prédiction comprenant en séries les sous-étapes de seconde quantification inverse IQ (444), de soustraction (445), de transformation inverse en cosinus discrète IDCT (446), de mémorisation d'image MEM (447), de compensation de mouvement MC (448), de transformation en cosinus discrète DCT (449) et d'addition (441). La sous-étape d'addition est apte à effectuer la somme d'un bloc de données transformées compensées en mouvement et issues de la transformation DCT et d'un bloc issu de la sous-étape de première quantification inverse IQ (402). La sous-étape de seconde quantification inverse IQ (444) est apte à quantifier un bloc issu de la sous-étape de quantification Q. La sous-étape de soustraction est apte à effectuer la différence entre un bloc issu de la sous-étape d'addition et un bloc issu de la sous-étape de seconde quantification inverse IQ (444). La sous-étape de compensation de mouvement MC est apte à fournir un bloc de données reconstruites compensées en mouvement à partir d'un vecteur de mouvement (MV) fourni par la sous-étape de décodage à longueur variable VLD et du contenu de la mémoire d'image MEM.

Le procédé de transcodage comprend en outre une étape de détection de bruit NDET (411) telle que décrite à la Fig. 2 et qui fournit, pour un macrobloc courant, un niveau de bruit (L) à partir d'informations issues de étape de décodage à longueur variable VLD concernant le type de codage des macroblocs (TI). Il comprend également une étape de filtrage spatial Ws (431,432) située entre la sous-étape de première quantification inverse IQ (402) et la sous-étape de quantification Q (442). L'étape de détection de bruit commande une étape de commutation (421) à partir du niveau de bruit (L) associé à un macrobloc courant.

Dans un mode de réalisation particulièrement avantageux, si le macrobloc courant est un macrobloc bruité, alors l'étape de filtrage applique un filtre spatial Ws tel que décrit précédemment. En revanche, si le macrobloc courant n'est pas un macrobloc bruité, l'étape de filtrage est inhibée.

Dans le mode de réalisation préféré, le macrobloc courant peut se voir attribuer deux niveaux de bruit:

- si le macrobloc courant est un macrobloc bruité principal (L1), alors l'étape de filtrage applique un filtre spatial Ws1 (431) aux blocs du macrobloc courant, avec $a_h = a_v = 8$ par exemple, correspondant à une première position (a) de l'étape de commutation,
- si le macrobloc courant est un macrobloc bruité frontalier (L2), alors l'étape de filtrage applique un filtre spatial Ws2 (432) aux blocs du macrobloc courant, avec $a_h = a_v = 16$ par exemple, correspondant à une deuxième position (c) de l'étape de commutation.

Enfin, si le macrobloc courant n'est pas un macrobloc bruité (L3), l'étape de filtrage est inhibée, correspondant à une troisième position (b) de l'étape de commutation.

Un procédé de transcodage comportant une telle réduction de bruit permet ainsi d'améliorer la qualité des images transcodées, notamment lorsque le bruit est assez fort. Le transcodage peut du reste encore être amélioré lorsque les macroblocs de type inter de l'image courante qui ne sont pas filtrés spatialement par l'étape de filtrage (431,432), sont filtrés temporellement.

La présente invention peut être réalisée sous la forme d'un logiciel (en anglais "software") embarqué sur un ou plusieurs circuits mettant en oeuvre la méthode de détection de bruit, de réduction de bruit ou de transcodage précédemment décrite. Il existe de nombreuses manières pour implémenter les fonctions précédemment décrites au moyen de logiciel. A cet égard, les Figs. 2 et 4 sont très schématiques. Donc, bien qu'une figure montre différentes fonctions sous forme de blocs séparés, ceci n'exclut pas qu'un seul logiciel effectue plusieurs fonctions. Ceci n'exclut pas non plus qu'une fonction puisse être effectuée par un ensemble de logiciels. Il est possible d'implémenter ces fonctions au moyen d'un circuit de détection de bruit, d'un circuit de réduction de bruit ou d'un circuit de transcodage, ledit circuit étant convenablement programmé. Un jeu d'instructions contenu dans une mémoire de programmation peut provoquer le circuit à effectuer les différentes opérations décrites précédemment en référence aux Figs 2 et 4. Le jeu d'instructions peut aussi être chargé dans la mémoire de programmation par la lecture d'un support de données comme, par exemple un disque qui contient le jeu d'instructions. La lecture peut également s'effectuer par l'intermédiaire d'un réseau de communication comme, par exemple, le réseau Internet. Dans ce cas, un fournisseur de service mettra le jeu d'instructions à la disposition des intéressés.

La Fig. 4 est également une représentation schématique d'un transcodeur selon l'invention, un bloc fonctionnel représentant cette fois un circuit du transcodeur au lieu d'une étape du circuit de transcodage. Le transcodeur comprend notamment un circuit de détection de bruit (411) réalisé, par exemple, selon le principe qui vient d'être décrit. Le circuit de détection est apte à fournir pour un macrobloc courant un niveau de bruit (L) à partir de types de codage (TI) du macrobloc courant et de macrobloc(s) de référence issus d'un circuit de décodage à longueur variable VLD (401). Le transcodeur comprend également une unité de filtrage spatial entre un circuit de quantification inverse (402) et un circuit de quantification (442), l'unité de filtrage comportant elle même un commutateur (421) destiné à sélectionner (a, b,c) un filtre (431,432) de l'unité de filtrage pour l'appliquer au macrobloc courant. Le circuit de détection de bruit commande le commutateur à partir du niveau de bruit de façon à appliquer ou non un filtre selon le principe qui a été précédemment décrit.

Aucun signe de référence entre parenthèses dans le présent texte ne doit être interprété de façon limitative. Le verbe "comprendre" et ses conjugaisons n'exclut pas la présence d'autres éléments ou étapes que ceux listés dans une phrase. Le mot "un" ou "une" précédant un élément ou une étape n'exclut pas la présence d'une pluralité de ces éléments ou de ces étapes.

**Revendications**

1.   Procédé de détection de bruit dans un flux de données vidéo (IS) codées par macroblocs selon une technique de codage prédictif par blocs, les macroblocs étant codés selon un type de codage, ledit procédé comprenant les étapes de:

   -   lecture (21) du flux de données vidéo codées afin de détecter dans une image courante (I_CUR) un type de codage intra et une position (k) d'un macrobloc correspondant à ce type de codage, appelé par la suite macrobloc intra,

   -   recherche (22) du ou des types de codage (T[v (k)]) d'un ensemble de macroblocs de référence dans une table de référence (T) contenant les types de codage de macroblocs contenus dans une image à codage prédictif de référence (I_REF), l'ensemble de macroblocs de référence ayant, dans l'image de référence, une position voisine (v(k)) de la position du macrobloc intra dans l'image courante, et

   -   détection d'un macrobloc bruité (23) à partir du ou des types de codage de l'ensemble de macroblocs de référence.

2.   Procédé de détection de bruit selon la revendication 1 où l'étape de détection comprend en outre une sous-étape de calcul (CAL) d'une valeur d'environnement (C) à partir d'un nombre de types de codage intra de l'ensemble de macroblocs de référence, l'étape de détection étant apte à affecter à un macrobloc au moins deux niveaux de bruit (L1,L2) à partir de la valeur d'environnement.

3.   Procédé de réduction de bruit dans un flux de données vidéo (IS) codées par macroblocs selon une technique de codage prédictif par blocs, les macroblocs étant codés selon un type de codage, ledit procédé comprenant les étapes de:

   -   détection de bruit selon la revendication 1 ou 2, apte à fournir, pour un macrobloc courant, un niveau de bruit (L) à partir du flux de données vidéo, et

   -   filtrage spatial apte à fournir un macrobloc de données filtrées en fonction du niveau de bruit fourni par l'étape de détection.

4.   Procédé de transcodage d'un premier flux de données vidéo (Si) codées par macroblocs selon une technique de codage prédictif par blocs, en un second flux de données vidéo codées (So), ledit procédé de transcodage comprenant les étapes de:

   -   décodage d'un macrobloc courant compris dans le premier flux de données vidéo codées, ladite étape de décodage comprenant une sous-étape de décodage à longueur variable (401) et une sous-étape de quantification inverse (402),

   -   codage, à la suite de l'étape de décodage, apte à fournir le second flux de données vidéo codées, ladite étape de codage comprenant une sous-étape de quantification (442),

**caractérisé en ce que** le procédé de transcodage comprend en outre les étapes de:

- détection de bruit (411), apte à fournir pour le macrobloc courant un niveau de bruit (L) à partir de types de codage (TI) du macrobloc courant et d'un ensemble de macroblocs de référence issus de la sous-étape de décodage à longueur variable, et
- filtrage spatial (431,432) entre la sous-étape de quantification inverse et la sous-étape de quantification, le procédé de transcodage étant apte à appliquer ou non l'étape de filtrage au macrobloc courant selon le niveau de bruit fourni par l'étape de détection de bruit.

5. Réducteur de bruit apte à recevoir un flux de données vidéo (IS) codées par macroblocs selon une technique de codage prédictif par blocs, les macroblocs étant codés selon un type de codage, le réducteur de bruit comprenant :

- des moyens de détection de bruit mettant en oeuvre le procédé de détection de bruit selon la revendication 1 ou 2, et aptes à fournir, pour un macrobloc courant, un niveau de bruit (L) à partir du flux de données vidéo, et
- un filtre spatial apte à fournir un macrobloc de données filtrées en fonction dudit niveau de bruit.

6. Dispositif de transcodage d'un premier flux de données vidéo (Si) codées par macroblocs selon une technique de codage prédictif par blocs, en un second flux de données vidéo codées (So), ledit dispositif de transcodage comprenant:

- une unité de décodage d'un macrobloc courant compris dans le premier flux de données vidéo codées, ladite unité de décodage comprenant un circuit de décodage à longueur variable (401) et un circuit de quantification inverse (402),
- une unité de codage, à la suite de l'unité de décodage, apte à fournir le second flux de données vidéo codées, ladite unité de codage comprenant un circuit de quantification (442),

**caractérisé en ce que** le dispositif de transcodage comprend en outre:

- un circuit de détection de bruit (411), apte à fournir pour le macrobloc courant un niveau de bruit (L) à partir de types de codage (TI) du macrobloc courant et d'un ensemble de macroblocs de référence issus du circuit de décodage à longueur variable, et
- une unité de filtrage spatial entre le circuit de quantification inverse et le circuit de quantification comportant un commutateur (421) destiné à sélectionner un filtre (431,432) de l'unité de filtrage pour l'appliquer au macrobloc courant, le circuit de détection de bruit étant apte à commander le commutateur selon le niveau de bruit.

7. Produit "programme d'ordinateur" pour un dispositif de détection de bruit comprenant un jeu d'instructions qui, lorsqu'elles sont chargées dans le dispositif de détection de bruit, amène celui-ci à effectuer le procédé de détection de bruit selon l'une des revendications 1 ou 2.

8. Produit "programme d'ordinateur" pour un dispositif de réduction de bruit comprenant un jeu d'instructions qui, lorsqu'elles sont chargées dans le dispositif de réduction de bruit, amène celui-ci à effectuer le procédé de réduction de bruit selon la revendication 3.

9. Produit "programme d'ordinateur" pour un dispositif de transcodage comprenant un jeu d'instructions qui, lorsqu'elles sont chargées dans le dispositif de transcodage, amène celui-ci à effectuer le procédé de transcodage de données vidéo selon la revendication 4.

EP 1 261 209 A2

FIG. 1

FIG. 2

FIG. 3

FIG. 4